(19) **Europäisches Patentamt / European Patent Office / Office européen des brevets**

(11) **EP 3 386 792 B1**

(12) **EUROPEAN PATENT SPECIFICATION**

(45) Date of publication and mention
of the grant of the patent:
**03.03.2021 Bulletin 2021/09**

(21) Application number: **16873461.4**

(22) Date of filing: **02.12.2016**

(51) Int Cl.:
**B60K 15/035** *(2006.01)*   **F02D 19/02** *(2006.01)*
**F02M 21/02** *(2006.01)*   **G01F 23/14** *(2006.01)*
**F02D 41/00** *(2006.01)*   **F02D 41/14** *(2006.01)*
**F02D 41/22** *(2006.01)*

(86) International application number:
**PCT/SE2016/051204**

(87) International publication number:
**WO 2017/099652 (15.06.2017 Gazette 2017/24)**

(54) **A METHOD AND A SYSTEM FOR DETERMINING TIME DATA RELATING TO A NON-COMBUSTION OUTLET PROCESS OF A FUEL GAS FROM A GAS TANK AT A VEHICLE**

VERFAHREN UND SYSTEM ZUR BESTIMMUNG VON ZEITDATEN IN BEZUG AUF EINEN NICHT-VERBRENNUNGSAUSLASSPROZESS EINES BRENNSTOFFGASES AUS EINEM GASBEHÄLTER AN EINEM FAHRZEUG

PROCÉDÉ ET SYSTÈME DE DÉTERMINATION DE DONNÉES TEMPORELLES RELATIVES À UN PROCESSUS DE SORTIE SANS COMBUSTION D'UN CARBURANT GAZEUX PROVENANT D'UN RÉSERVOIR DE GAZ D'UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2015 SE 1551604**

(43) Date of publication of application:
**17.10.2018 Bulletin 2018/42**

(73) Proprietor: **Scania CV AB**
**151 87 Södertälje (SE)**

(72) Inventors:
- WALLENGREN, Mårten
  **146 50 Tullinge (SE)**
- KLINGBORG, Erik
  **126 48 Hägersten (SE)**
- LÖTHGREN, Svante
  **129 34 Hägersten (SE)**
- WESSEL, Christian
  **152 59 Södertälje (SE)**

(74) Representative: **Scania CV AB**
**Patents, GP 117kv**
**151 87 Södertälje (SE)**

(56) References cited:
EP-A2- 2 287 458   JP-A- 2000 303 909
US-A- 5 373 700   US-A1- 2014 230 789
US-B1- 8 958 972

- AHLUWALIA R K ET AL: "Dynamics of cryogenic hydrogen storage in insulated pressure vessels for automotive applications", INTERNATIONAL JOURNAL OF HYDROGEN ENERGY, ELSEVIER SCIENCE PUBLISHERS B.V., BARKING, GB, vol. 33, no. 17, 1 September 2008 (2008-09-01), pages 4622-4633, XP025771124, ISSN: 0360-3199, DOI: 10.1016/J.IJHYDENE.2008.05.090 [retrieved on 2008-08-22]
- AHLUWALIA R K; ET AL.: 'Dynamics of cryogenic hydrogen storage in insulated pressure vessels for automotive applications' INTERNATIONAL JOURNAL OF HYDROGEN ENERGY, ELSEVIER SCIENCE PUBLISHERS vol. 33, 22 August 2008, pages 4622 - 4633, XP025771124
- LI ZHIYONG ET AL.: 'Comparison of the harm effects of accidental releases: Cryo-compressed hydrogen versus natural gas' INTERNATIONAL JOURNAL OF HYDROGEN ENERGY vol. 3, 21 August 2013, pages 11174 - 11180, XP028687467

## Description

TECHNICAL FIELD

The present invention relates to a method and a system for determining time data relating to a non-combustion outlet process of a fuel gas from a gas tank at a vehicle. The present invention also relates to a computer program and a computer program product.

BACKGROUND ART

A vehicle tank for fuel gas is usually not equipped with a cooling device. Since the fuel gas inside the tank usually is stored far below the ambient air temperature of the tank, heat radiation will be transferred from the environment to the fuel gas. Due to this heat transfer, the pressure in the fuel tank will increase. In case the fuel gas is at least partly stored in its liquid phase, the heat transfer can warm up the gas so that it will transform into its gaseous phase. This effect increases the pressure as well and might be predominant in case it occurs. This is especially the case when an engine of the vehicle is not performing any combustion process, for example, since the engine is turned off. Even other effects might cause a pressure increase in the gas tank.

Due to the possible increase in pressure, tanks are equipped with a security valve which will open when the pressure inside the tank gets too high. Then the fuel gas will, at least partly, be released from the fuel tank so as to lower the pressure in the tank. This is to prevent, for example, a rupture of the tank due to too high pressure.

Fuel gases do, however, usually contain components which can damage the environment when being released. As an example, liquefied natural gas, LNG, usually contains high amounts of methane which acts as a greenhouse gas when released to the environment. Further, when the vehicle is located inside a space with no or with low air circulation, such as a garage, a release of the fuel gas from the tank could possible harm a person entering the garage after fuel gas has been released there. This could be, for example, through direct influences of the gas or through an explosion risk or a fire risk of the gas. There is thus a need to prevent, or at least to reduce the amount of fuel gas released to the environment from the security valve of the tank.

Prior art document AHLUWALIA R K ET AL: "Dynamics of cryogenic hydrogen storage in insulated pressure vessels for automotive applications "INTERNATIONAL JOURNAL OF HYDROGEN ENERGY, ELSEVIER SCIENCE PUBLISHERS B.V., BARKING, GB, val. 33, no. 17, 1 September 2008 (2008-09-01), pages 4622-4633, ISSN: 0360-3199; discloses a LH2 gas tank model.

SUMMARY OF THE INVENTION

One object of the present invention is to provide a method, a system, a computer program, and a computer program product which allow preventing, or at least reducing the amount of fuel gas released to the environment from a tank at a vehicle.

Another object of the present invention is to provide a method, a system, a computer program, and a computer program product which can provide information regarding a non-combustion outlet process.

Yet another object of the present invention is to provide a method, a system, a computer program, and a computer program product for determining time data relating to a non-combustion outlet process of a fuel gas from a gas tank at a vehicle.

A further object of the present invention is to provide an improved method, system, computer program, and computer program product. An even further object of the present invention is to provide an alternative method, system, computer program, and computer program product.

At least some of the objects of the present invention are achieved by a method according to independent claim 1 and a system according to independent claim 7.

By determining the time data information regarding the non-combustion outlet process is generated. This allows taking actions based on the determined time data. Such actions can be managing the operation of a vehicle fleet such that the non-combustion outlet process will not occur. This would prevent emission of the fuel gas to the environment. Another action can be managing the operation of a vehicle fleet such that the amount of fuel gas released to the environment from one or more non-combustion outlet processes will be minimised. This reduces the emission of the fuel gas to the environment. Yet another action can be operating a vehicle in such a way that the fuel gas will not release substantially completely from the tank due to a non-combustion outlet process. This reduces costs for towing of vehicles, or at least costs of fuelling the vehicle outside of a fuelling station, such as a gas station. The determined information can also be used in any other application. This might allow providing new functionality to the vehicle.

The determined time data comprises a time relating to when the fuel gas will start to release from the gas tank. In one example, the determined time data comprises a time relating to when the tank will be substantially emptied from said fuel gas. This time can be a time period or a moment in time. These two times are very important in practice. The fuel gas starting to release from the gas tank can start a process of releasing fuel gas to the environment. Determining time data relating to this, can allow preventing the process, thus reducing cost for unused fuel and minimising emissions. The tank being substantially emptied from said fuel gas can be the stop of a process of releasing fuel gas to the environment. Determining time data relating to this, can allow preventing cost for refuelling the vehicle outside a refuelling station.

In one example, the method further comprises the step of determining the pressure and/or the temperature in the gas tank. The model takes into account the determined pressure and/or temperature in the gas tank. The pressure and/or the temperature are important information regarding the state of the fuel gas. Determining one or both of them can give a good characterisation of the state of the fuel gas.

In one example, the method further comprises the step of determining data relating to the volume of the fuel gas in its liquid phase in the gas tank. The model takes into account the determined data relating to the volume of the fuel gas in its liquid phase in the gas tank. When using gas which can be in its liquid phase, data relating to the volume of the fuel gas in its liquid phase in the tank is important information regarding the state of the fuel gas. Determining this data relating to the volume can give a good characterisation of the state of the fuel gas.

The method further comprises the step of presenting the determined time data to an operator of the vehicle. When presenting this information to the operator during driving of the vehicle, the operator will be able to adapt the driving in response to said presented information. Such adaption could be adapting the driving such that a non-combustion outlet process from the tank will be prevented for a certain amount of time when turning off the combustion engine of the vehicle. A presentation can also be used to plan the further operation of the vehicle.

In one example, the determining of time data comprises performing an Euler method, such as an Euler forward method, of the model for the state of the fuel gas. This provides an easy and practical way of determining the time data.

In one example, the determining of time data comprises the step of determining a first state of the fuel gas in the gas tank. In one example, the determining of time data comprises the step of repeatedly, until a pre-determined condition is fulfilled, determining a next state of the fuel gas in the gas tank after a pre-determined time period, based on the model and based on the previous determined state of the fuel gas in the gas tank. This provides an easy and practical way of determining the time data.

In one embodiment, the determined time data comprises a time relating to when the tank will be substantially emptied from the fuel gas.

In one embodiment, the system further comprises means for determining the pressure and/or the temperature in the gas tank. The model takes into account said determined pressure and/or temperature in the gas tank.

In one embodiment, the system further comprises means for determining data relating to the volume of the fuel gas in its liquid phase in the gas tank. The model takes into account the determined data relating to the volume of the fuel gas in its liquid phase in the gas tank.

The system further comprises means for presenting the determined time data to an operator of the vehicle.

At least some of the objects are achieved by a vehicle which comprises a system according to the present disclosure.

At least some of the objects are achieved by a computer program for determining time data relating to non-combustion outlet process of a fuel gas from a gas tank at a vehicle. The computer program comprises program code for causing an electronic control unit or a computer connected to the electronic control unit to perform the steps of the method according to the present disclosure.

At least some of the objects are achieved by a computer program product containing a program code stored on a computer-readable medium for performing method steps according to the method of the present disclosure. The computer program is run on an electronic control unit or a computer connected to the electronic control unit.

The system, the vehicle, the computer program and the computer program product have corresponding advantages as have been described in connection with the corresponding examples of the method according to this disclosure.

Further advantages of the present invention are described in the following detailed description and/or will arise to a person skilled in the art when performing the invention.

BRIEF DESCRIPTION OF THE DRAWINGS

Fig. 1 shows, in a schematic way, a vehicle according to one embodiment of the present invention;

Fig. 2a shows, in a schematic way, a system according to one embodiment of the present invention;

Fig. 2b shows, in a schematic way, a view of an example of gas tank which can be used in connection with the present invention;

Fig. 2c shows, in a schematic way, a sketch of an example of an inner configuration of gas tank which can be used in connection with the present invention;

Fig. 3 shows, in a schematic way, a flow chart over an example of a method according to the present invention;

Fig. 4 shows, in a schematic way, a device which can be used in connection with the present invention.

DETAILED DESCRIPTION

Here, and in the whole document, the term "non-combustion outlet process" relates to an outlet process of the fuel gas from the gas tank where the fuel gas is not intended to be used in a following combustion process. Thus, an outlet process where the fuel gas subsequently enters a combustion engine, such as a gas engine, and then will be burned inside the combustion engine, is not considered to be a non-combustion outlet process.

Here, and in the whole document, the term "fuel gas" refers to a substance which under ordinary conditions, such as ordinary atmospheric pressure and ordinary atmospheric temperature, is basically only in its gaseous phase. A prominent, non-limiting example of a fuel gas is liquefied natural gas, LNG. Many more examples of fuel gases are known in the art. The term "fuel gas" does thus not relate to petrol, diesel, or the like, which to a very large extend are in its liquid phase under ordinary conditions.

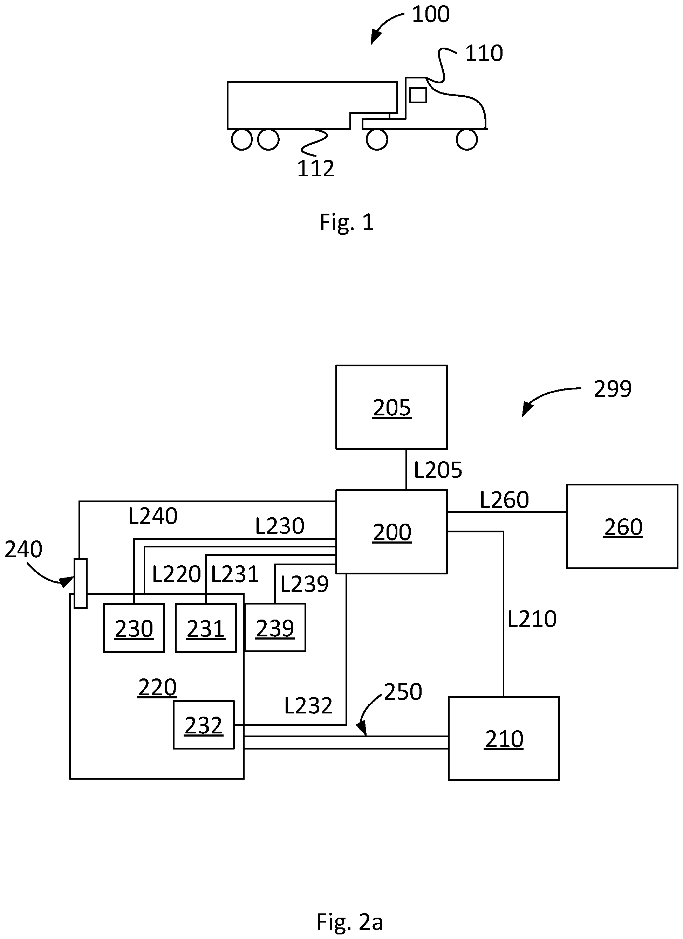

Fig. 1 shows a side view of a vehicle 100. In the shown example, the vehicle comprises a tractor unit 110 and a trailer unit 112. The vehicle 100 can be a heavy vehicle such as a truck. The vehicle can have a cryogenic tank. In one example, no trailer unit is connected to the vehicle 100. The vehicle 100 can comprise a combustion engine. The combustion engine can, for example, be a gas engine or a diesel engine. The vehicle can comprise a cryogenic engine. The vehicle 100 comprises a system 299, se Fig. 2a. The system 299 can be arranged in the tractor unit 110.

In one example, the vehicle 100 is a bus. The vehicle 100 can be any kind of vehicle comprising a cryogenic tank. Other examples of vehicles comprising a gas engine are boats, passenger cars, construction vehicles, and locomotives.

The innovative method and the innovative system according to one aspect of the invention are also well suited to, for example, systems which comprise industrial engines and/or enginepowered industrial robots.

The term "link" refers herein to a communication link which may be a physical connection such as an opto-electronic communication line, or a non-physical connection such as a wireless connection, e.g. a radio link or microwave link.

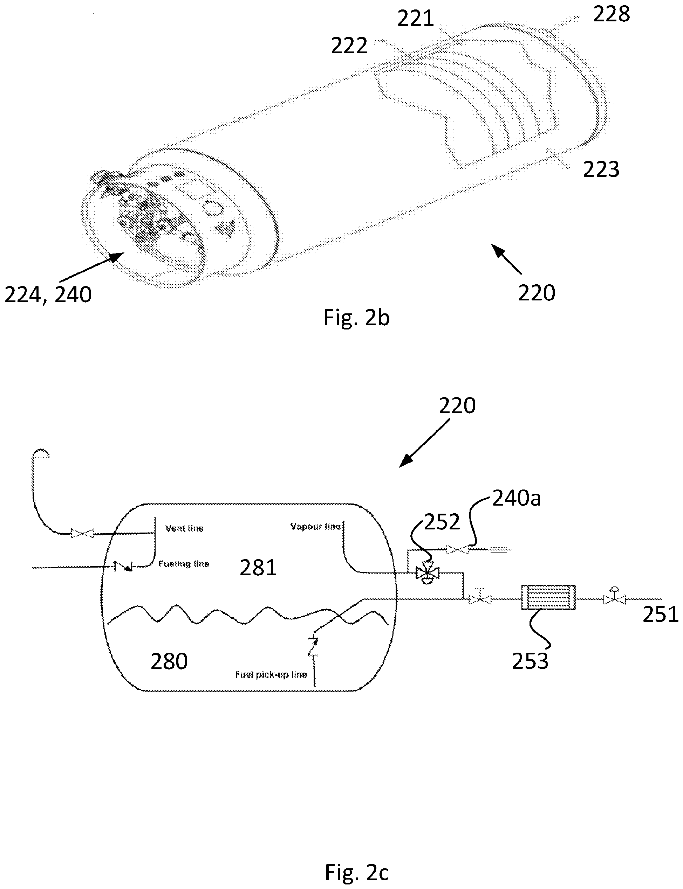

Fig. 2a shows, in a schematic way, a system 299 according to one embodiment of the present invention. Not all elements in the system 299 are necessary to perform the invention. Instead, an embodiment of the system has been chosen which well explains the principle of the invention. The system 299 comprises a tank 220. In the following, the expressions tank and gas tank are used interchangeably. The tank 220 is arranged to store a fuel gas for the vehicle. The tank 220 is thus preferably a storage tank. The tank 220 can be a pressurised tank. A possible embodiment of the tank 220 is explained in more detail in relation to Fig. 2b. The fuel gas can be any kind of fuel gas, such as, for example, liquefied natural gas, LNG, liquefied petroleum gas, LPG, liquefied hydrogen, or liquefied nitrogen. The fuel gas can be any kind of cryogenic liquid or fuel that exists in both liquid and gas phase in a cryogenic container.

In relation to the system 299 a combustion engine 210 is depicted. The combustion engine 210 can be a gas engine. A connection arrangement 250 connects the tank 220 with the combustion engine 210. The connection arrangement 250 can comprise pipes, tubes, hoses, or the like. The connection arrangement 250 is arranged to allow transport of fuel gas from the tank 220 to the combustion engine 210.

The system 299 further comprises a first control unit 200. Said first control unit 200 is arranged for communication with said combustion engine 210 via a link L210. Said first control unit 200 is arranged to receive information from said combustion engine 210. Said received information can comprise information relating to the fact whether combustion processes are taken place at the combustion engine 210 or not.

The tank 220 comprises an outlet arrangement 240. The outlet arrangement 240 is arranged to allow a non-combustion outlet process. In one example, the outlet arrangement 240 comprises a so-called boil-off valve. In one example, the outlet arrangement 240 is arranged to allow release of the fuel gas from the tank. The allowance can be dependent on a pre-determined condition inside the tank 220. As an example, the outlet arrangement can be arranged to allow release of the fuel gas from the tank 220 if the pressure inside the tank 220 is above a pre-determined value. In one example, said pre-determined value for the pressure inside the tank 220 is 16 bar. The release of the fuel gas can thus be conditioned on security considerations for the tank 220. As an example, the outlet arrangement 240 can allow release of the fuel gas to prevent damages of the tank 220, such as, for example, due to too high pressure.

Said first control unit 200 is arranged to control operation of said outlet arrangement 240. Said control can comprise opening and/or closing of said outlet arrangement 240. Said first control unit 200 is arranged for communication with said outlet arrangement 240 via a link L240. Said first control unit 200 can be arranged to receive information from said outlet arrangement 240.

The system 299 comprises a first sensor arrangement 230. The first sensor arrangement 230 can be arranged to determine a temperature inside the tank 220. The first sensor arrangement 230 can comprise a first temperature sensor. The first temperature sensor is preferable arranged inside the tank 220.

Said first control unit 200 is arranged to control operation of said first sensor arrangement 230. Said first control unit 200 is arranged for communication with said first sensor arrangement 230 via a link L230. Said first control unit 200 can be arranged to receive information from said first sensor arrangement 230.

The system 299 comprises a second sensor arrangement 231. The second sensor arrangement 231 can be arranged to determine a pressure inside the tank 220. Said pressure inside the tank 230 is preferably the pressure of the fuel gas in the tank 220. The second sensor arrangement 231 can comprise a pressure sensor. The pressure sensor is preferable arranged inside the tank 220. In one example, the pressure sensor is arranged at the connection arrangement 250. From the pressure in the connection arrangement 250 it is possible to derive the pressure in the gas tank 220. In many vehicles a pressure sensor is already placed at the connection arrangement 250. Thus using a pressure sensor there can lower the cost of the system 299.

Said first control unit 200 is arranged to control operation of said second sensor arrangement 231. Said first control unit 200 is arranged for communication with said second sensor arrangement 231 via a link L231. Said first control unit 200 can be arranged to receive information from said second sensor arrangement 231.

The system 299 comprises a third sensor arrangement 232. The third sensor arrangement 232 can be arranged to determine data relating to the volume of a liquid in the gas tank 220. As an example, the third sensor arrangement 232 can be arranged to determine a level for a liquid inside the tank. Since the geometrical configuration of the tank 220 is known and does not change significantly during operation, knowing the level of the liquid can be directly transferred to the volume of the liquid. Said level for a liquid can be the level of the fuel gas in its liquid form. The third sensor arrangement 232 can comprise a level sensor. The level sensor is preferably arranged inside the tank 220. This is, however, not a requirement. An example of a level sensor which can be arranged outside the tank is an optical sensor, in case the tank is at least partly transparent for the wavelengths used by the optical sensor.

Said first control unit 200 is arranged to control operation of said third sensor arrangement 232. Said first control unit 200 is arranged for communication with said third sensor arrangement 232 via a link L232. Said first control unit 200 can be arranged to receive information from said third sensor arrangement 232.

The system 299 comprises a fourth sensor arrangement 239. Said fourth sensor arrangement 239 can be arranged to determine an ambient temperature $T_{amb}$ of the tank 220. Said ambient temperature relates to a temperature outside the tank 220. Said fourth sensor arrangement can comprise a second temperature sensor. The second temperature sensor is preferably arranged outside the tank 220. The second temperature sensor does not necessarily need to be at the tank 220. In one example, the second temperature sensor is at another part of the vehicle 100. Usually the ambient temperature around the vehicle is not differing too much between different parts of the vehicle. Therefore another position at the vehicle might give representative ambient temperature values for the tank 220. In one example, said fourth sensor arrangement 239 is arranged to receive temperature information relating to the ambient temperature of the vehicle via a link (not shown in the figure). As an example, the fourth sensor arrangement can be arranged to receive temperature information from a weather information provider. This is an example where there is no need for a second temperature sensor at the vehicle.

The fourth sensor arrangement 239 is in one example arranged to determine further ambient conditions of the tank 220. Examples of further ambient conditions are wind speed, amount and kind of precipitation, amount and kind of solar radiation relating to the place of the vehicle, or the like. The fourth sensor arrangement 239 can comprise one or more sensors for determining said further ambient conditions. One example of such a sensor is a wind sensor. In one example, the fourth sensor arrangement 239 is arranged to receive said further ambient conditions from a weather information provider.

When relating to the ambient temperature or further ambient conditions, this information can be time-dependent. As an example, the provided information from the weather information provider can be time-dependent. This can include predictions of the ambient temperature and/or further ambient conditions. Thus, in one example a time series of the ambient temperature is provided from the weather information provider which comprises a prediction of the ambient temperature for the next five days.

Said first control unit 200 is arranged to control operation of said fourth sensor arrangement 239. Said first control unit 200 is arranged for communication with said fourth sensor arrangement 239 via a link L239. Said first control unit 200 can be arranged to receive information from said fourth sensor arrangement 239.

Said first control unit 200 is arranged to control operation of the tank 220. Said first control unit 200 is arranged for communication with said tank 220 via a link L220. Said first control unit 200 can be arranged to receive information from said tank 220. Said first control unit 200 can thus control any of the elements of the tank 220 described in relation to Fig. 2c. Said first control unit 200 can thus receive information from any of the elements of the tank 220 described in relation to Fig. 2c.

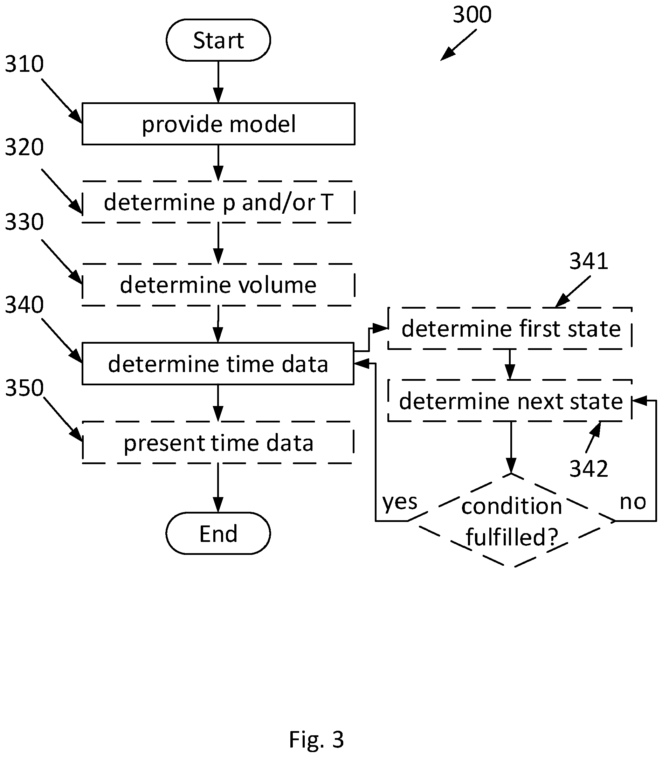

The first control unit 200 can provide a model for the state of the fuel gas in the tank 220. The first control unit 200 is arranged to determine time data relating to the outlet process of the fuel gas based on the model. This is described in more detail in relation to Fig. 3.

A second control unit 205 is arranged for communication with the first control unit 200 via a link L205 and may be detachably connected to it. It may be a control unit external to the vehicle 100. It may be adapted to conducting the innovative method steps according to the invention. The second control unit 205 may be arranged to perform the inventive method steps according to the invention. It may be used to cross-load software to the first control unit 200, particularly software for conducting the innovative method. It may alternatively be arranged for communication with the first control unit 200 via an internal network on board the vehicle. It may be adapted to performing substantially the same functions as the first control unit 200, such as determining time data relating to a non-combustion outlet process of a fuel gas from a gas tank at a vehicle. The innovative method may be conducted by the first control unit 200 or the second control unit 205, or by both of them.

The system 299 comprises a presenting arrangement 260. Said presenting arrangement 260 is arranged for presenting said determined time data to an operator of the vehicle. The presenting

arrangement can comprise any of a screen, a speaker, a display, an indicator or the like. The presenting can be optically, acoustically, and/or tactile. In one example, said time data is presented via a voice. In one example, said time data is presented on a screen and/or a display. In one example, said time data is presented on an analogue presenting means, for example via a pointer. In one example, said presenting means can be outside the vehicle. In one example, said presenting means is a mobile device. In one example, said presenting means are at an operating centre of a coach company, shipping company, or the like.

Said first control unit 200 is arranged to control operation of said presenting arrangement 260. Said first control unit 200 is arranged for communication with said presenting arrangement 260 via a link L260. Said first control unit 200 can be arranged to receive information from said presenting arrangement 260.

It should be emphasised that most of the aforementioned components are facultative. As an example, there is no need to have both the first and the second sensor arrangement 230, 231. From the determined temperature inside the tank 220, the pressure inside the tank 200 can be derived, and vice versa.

In a minimal version of the invention, none of the first-fourth sensor arrangements 230-232, 239 is needed. When knowing the state of the fuel gas at one moment of time, it is in principle possible to determine the state of the fuel gas at any later moment of time when using a model for the state of the fuel gas in the gas tank 220. Thus, it is in principle enough to determine the state of the gas in the tank 220 once when the tank is used for the first time 220. This state can be determined based on a known geometry of the tank and a known state of the fuel gas which is transferred from a different storage tank, such as a tank at a gas station, to the tank 220 at the vehicle.

Fig. 2b shows, in a schematic way, a view of an example of a gas tank 220 which can be used in connection with the present invention. The tank 220 comprises an inner vessel 221. In the inner vessel the fuel gas such as LNG can be stored. An insulation arrangement 222 is arranged around the inner vessel 221. This insulation arrangement 222 can comprise insulation material. This insulation arrangement can comprise aluminium foils or any other reflective shield material. The tank 220 comprises an outer jacket 223. Preferably, there is a vacuum between the inner vessel 221 and the outer jacket 223. In one example, the vacuum is between the insulation arrangement 222 and the outer jacket 223. An emergency evacuation path 228 is arranged at one side of the tank 220.. The other side of the tank comprises a connection arrangement 224. The connection arrangement can be arranged to provide a connection to the combustion engine 210. Also an outlet arrangement 240, such as a boil-off valve, is arranged at this side of the tank 220. Even a secondary outlet arrangement is situated there. The secondary outlet arrangement is in one example a back-up outlet arrangement. The back-up outlet arrangement is arranged to operate in case the outlet arrangement 240 malfunctions.

Fig. 2c shows, in a schematic way, a sketch of an example of an inner configuration of a gas tank 220 which can be used in connection with the present invention. At the bottom of the tank the liquid phase 280 of the fuel gas is indicated. Above the liquid phase, the fuel gas is present in its gaseous phase 281. The tank comprises an outlet 251 to the combustion engine. The outlet 251 can be connected to the connection arrangement 250.

In one embodiment, the tank 220 is arranged to transmit fuel gas in its gaseous phase to the combustion engine when the pressure is above a pre-determined threshold, for example 10 bar. This can be done by opening a phase selector 252. The gas is then transported to a heat exchanger 253 and further to the combustion engine. In case the pressure is below said pre-determined threshold, for example 10 bar, the phase selector 252 is closed and the fuel gas is transported from its liquid phase to the heat exchanger 253, where it is changing phase to the gaseous phase, and is then transported to the combustion engine.

Such an arrangement will keep the pressure around the pre-determined threshold during operation of the combustion engine. However, in case a lot of fuel gas is consumed by the combustion engine, the pressure in the tank may drop below the pre-determined threshold.

A boil-off valve 240a is present at one side of the tank.

Fig. 2c does only show one possible embodiment of a tank. Other configurations are possible, such as tanks containing a pump configuration, or the like.

Fig. 3 shows, in a schematic way, a flow chart over an example of a method 300 according to the present invention. The method 300 is a method for determining time data relating to a non-combustion outlet process of a fuel gas from a gas tank at a vehicle. The non-combustion outlet process preferably relates to a controlled outlet process, i.e. an outlet process which occurs under pre-determined conditions. An example of such an outlet process under pre-determined condition is the opening of an outlet arrangement under a pre-determined condition, such as when a pre-determined pressure is reached on one side of the outlet arrangement. Examples of non-controlled outlet processes are accidental outlet processes, such as outlet process due to material failure, material disruption, or the like.

In one example the method is performed at a pre-determined condition. Such a pre-determined condition can be the turning-off of the combustion engine, or a similar condition relating to the turning-off of the combustion engine. Such a similar condition can be the release of the ignition key from the vehicle, the opening of a door, such as the door for the driver, the locking of the vehicle, or the like. The method starts with step 310.

In step 310, a model for the state of the fuel gas in the gas tank is provided. In one example, the model assumes that the fuel gas consists of methane. In the following, it will be described how the model can look like if methane is used. The described method is, however, applicable to any other component of the fuel gas as well. The method is thus, for example, applicable to ethane, propane, butane, or the like. In case the fuel gas is a mixture of different gases, the model can be applied to every component of the fuel gas and then be combined according to the composition of the fuel gas.

In one example, the model is based on the assumption that a saturated state is present in the tank. The term saturated state relates in one example to the fact that there is a thermodynamic equilibrium between the fuel gas in its gaseous and its liquid phase. Since the tank usually is well isolated against the environment, and the amount of heat transfer from the environment to the tank thus is quite limited, this assumption is in general well justified. In one example, the model is based on the assumption, that the fuel gas in its gaseous and its liquid phase has the same temperature. In one example, the model is based on the assumption that the heat transfer can be described by a linear model. In one example, the heat transfer from the environment to the tank is proportional to the temperature gradient between the ambient temperature $T_{amb}$ of the tank and the temperature inside the tank.

In one example, the state x of the gas is described as x=(T, p, $V_l$, $m_g$, $m_l$), where T denotes the temperature of the gas in the tank, and thus, in case a saturated state is assumed, also the liquid in the tank, p denotes the pressure of the gas in the tank, $V_l$, denotes the volume of the gas in the liquid phase, $m_g$ denotes the mass of the fuel gas in its gaseous phase, and $m_l$ denotes the mass of the fuel gas in its liquid phase. In one example, one or more of the variable of *x* are not used for the state. As an example, when no outlet process of the fuel gas takes place, the sum of the masses of the fuel gas in its gaseous and its liquid phase will be constant. Thus, it is possible to derive one quantity from the other. Further, in one example, it is not important to take the $m_l$ and $m_g$ into account at all, especially if no outlet process of the fuel gas takes place.

In one example, T can be derived from p, or vice versa. This is especially the case if a saturated state is assumed in the model. Especially when one quantity is derivable from another quantity, it is not needed to describe both quantities in the state of the tank/fuel gas.

In one example, the model takes into account a state of the environment and/or a state of the flow of the fuel gas from and/or to the tank. In one example, the state of the environment takes into account any of the ambient temperature of the tank, wind speed, amount and kind of precipitation, amount and kind of solar radiation relating to the place of the vehicle, or the like. In one example, the vehicle is usually parked in a garage with substantially always the same temperature, no wind speed, no precipitation, substantially no solar radiation, and the like. In that case, the state of the environment there is no need to take the state of the environment into account. A person skilled in the art will realise which of the above quantities are important in a given situation and which not. Less variables will lower the complexity of the model, but might increase uncertainty. The state of the flow of the fuel gas from and/or to the tank can take into account any of a mass flow $\dot{m}_{e,g}$ of the fuel gas in its gaseous phase from the tank to the gas engine, a mass flow $\dot{m}_{e,l}$ of the fuel gas in its liquid phase from the tank to the gas engine, a mass flow $\dot{m}_v$ of the fuel gas into the environment/atmosphere, for example due to the pressure in the tank being too high, and/or the mass flow of the fuel gas into the tank, for example due to fuelling the tank at a gas station. In one example, some or all of the above quantities are zero. This is for example the case if the vehicle is parked and the method 300 will be used to determine the time until the gas in the tank will arrive at a pressure threshold which will cause a boil-off valve to open. In one example, the model takes into account, that the mass is constant, for example that $\dot{m}_g = \dot{m}_{BOG} - \dot{m}_{e,g} - \dot{m}_v$, and that $\dot{m}_l = -\dot{m}_{BOG} - \dot{m}_{e,l}$, wherein $\dot{m}_g$ denotes the total mass flow in the gaseous phase, $\dot{m}_l$ denotes the total mass flow in the liquid phase, and $\dot{m}_{BOG}$ denotes the mass flow between the liquid and the gaseous phase. In one example, said mass flow between the liquid and the gaseous phase takes into that there is a thermodynamic equilibrium between the fuel gas in its gaseous and its liquid phase. In one example, this is expressed as the equation

$$\dot{m}_{BOG} = \frac{C(T_{amb}-T)-(c_{p,g}m_g+c_{p,l}m_l)\dot{T}}{L_v(T)},$$

wherein C denotes a constant relating to the insulation of the tank, $C_{p,g}$ denotes the specific heat capacity of the fuel gas in its gaseous phase, $C_{p,l}$ denotes the specific heat capacity of the fuel gas in its liquid phase, T denotes the temperature change, and $L_v(T)$ denotes the latent heat of vaporisation. In one example, the latent heat of vaporisation is modelled as being non-constant. In one example, the latent heat of vaporisation is modelled as being temperature dependent and/or pressure dependent.

When providing a model for the state of the fuel gas in the gas tank of the vehicle, such a model differs in general greatly from a model for the state of the fuel gas in a storage tank which is not carried by the vehicle, such as for example, a storage tank at a LNG transport ship, or at a harbour. This is due to the fact that a vehicle in general does not have any reliquefaction system. In a reliquefaction system the released boil-off gas is in one example reliquefied with compressors in stages. Also the pressure in the tank varies greatly. As an example, when fuelling the vehicle, the pressure in the tank may be 2 bar. This can be the case if the gas pressure is 2 bar in the storage tank at a gas station. The pressure in the tank of the vehicle can reach up to a pre-determined threshold, such as 16 bar, when the vehicle is not operated for a while. Above said pre-determined threshold, the outlet arrangement might release the gas from the tank. Since a model for a storage tank which is not carried by the vehicle in general assumes constant pressure and therefore constant density and latent heat of vaporisation in the storage tank, such a model can in general not be transferred to the tank of the vehicle.

In one example, when assuming that a saturated state is present in the tank that gives a relation between T and p, and/or between p and the gas density, and/or between T and the liquid density. Such relations for a specific gas can be empirically determined and are usually publically available for the most common gases.

The provided model can be stored in the first or the second unit 200, 205. After step 310, the method continues with the optional step 320.

In step 320, the pressure and/or the temperature in the gas tank is determined. In one example this is performed by a pressure sensor and/or a temperature sensor. In general, the pressure can be derived from the temperature, and vice versa. Thus, in general it is enough to only determine one of temperature and/or pressure. However, determining both independently can have the advantage of adding redundancy to the method and cross-check, whether the pressure and the temperature values are reasonable, respectively. Determining both independently can also be used to check the composition of the fuel gas. As has been described in relation to Fig. 2a, it is in principle possible to predict the state of the fuel at any later time, based on an initial determination of the state, such as during the first fuelling of the tank. Step 320 is thus optional, since, for example, such a prediction could give the same information as step 320. After step 320 an optional step 330 is performed.

In the optional step 330, data relating to the volume of the fuel gas in its liquid phase in the gas tank is determined. In one example, the step comprises determining the volume of the fuel gas in its liquid phase in the gas tank. In one example, the step comprises determining a level of the liquid phase of the fuel gas in the tank. This can be performed by a level sensor. From this level, the volume of the fuel gas in its liquid phase in the gas tank can then be derived when knowing the geometry of the tank. After the optional step 330, step 340 is performed.

In step 340, time data relating to the outlet process of the fuel gas based is determined based on said model. Said determined time data comprises a time relating to when said fuel gas will start to release from said gas tank. This time is often referred to as the hold time of tank. In one example, said release relates to the fact that a pre-determined threshold for the pressure inside the tank has been achieved. In one example, said release relates to a security release from the tank, such as to avoid damage to the tank. Said release can relate to the opening of a so-called boil-off valve.

It is especially useful to perform the method, and thus step 340, to determine what happens in the tank when the vehicle is not operated. Said non-operating of the vehicle can relate to the fact that the combustion engine of the vehicle is turned off. During operation of the combustion engine, the pressure in the tank is usually lowered or kept constant. This is due to the fact that a release of fuel gas from the tank to the combustion engine will be the predominant effect and that this release lowers pressure in the tank. Usually, the tank is arranged to keep a certain lower level of pressure in the tank, such as, for example, 10 bar. This can be achieved by other measures. In that case the pressure in the tank is approximately constant. A non-combustion outlet process of the fuel gas from the gas tank at the vehicle will thus usually not take place during operation of the combustion engine. Such a non-combustion outlet process of the fuel gas from the gas tank at the vehicle takes, however, usually place at some moment of time after turning off of the combustion engine. This is, for example, due to heat transfer from the environment to the tank, resulting in too high pressure so that fuel gas will release due to security reasons. It is thus advantageous to determine the time period after which such release will occur, or to determine the moment in time when such release will occur. When knowing said time period/said moment in time, an operator can act accordingly to avoid such a release. Said time period is typically in the order of a few days after turning off of the combustion engine. However, if the combustion engine only has been operated shortly and the pressure in the tank was close to the threshold when fuel gas will be released due to security reasons, the pressure in the tank might not have been lowered substantially. In that case said time period can be minutes or hours. When having information regarding the time period, an operator of the vehicle can, for example, decide to use a vehicle where a release will appear shortly instead of a vehicle where a release will only appear after a longer period of time. This might be especially the case when having access to a larger fleet of vehicles, or at least to two vehicles.

In one example, said determined time data further comprises a time relating to when the tank will be substantially emptied from the fuel gas. Said term substantially emptied can relate to the fact that the pressure of the fuel gas in the gas tank is below a pre-determined threshold, that the volume of the fuel gas in its liquid form is below a pre-determined threshold, or any other similar indication. In one example said time is a moment in time when the tank will be substantially emptied. In one example said time is a time period when the tank will be substantially emptied. When the tank is substantially emptied from the fuel gas, the vehicle might be no longer operated due to lack of fuel, or might only be operated for a limited time/distance. It is thus advantageous for an operator of the vehicle to know when this will occur, so that the vehicle can be transported to a fuel station for refuelling in due time. In one example, the substantially emptying of the fuel gas relates to a non-combustion process, and thus not to the fact that the tank is emptied due to driving. If, for example, the boil-off valve opens as described above due to too high pressure in the tank, fuel gas is usually released until the pressure in the tank is below a second pre-determined threshold. After some time, the pressure will, however, have risen again due to heat transfer from the environment, so that the boil-off valve will open again. This process can then repeat until the tank is substantially emptied from fuel gas. In one example the expression substantially emptied relates to the fact that all the fuel gas in the tank is in its gaseous phase, has the same temperature as the ambient temperature of the tank and a pressure below the pressure where the outlet arrangement, such as the boil-off valve, opens.

In one example, step 340 comprises performing an Euler method, such as an Euler forward method, of said model for the state of said fuel gas. In one example, a pressure difference between a pressure value when the non-combustion outlet process of the fuel gas from the gas tank at the vehicle will occur and between a current pressure value in the tank is determined. This pressure difference can then be divided by a pressure gradient, i.e. a change of pressure over time. In one example, the pressure gradient is determined by the model which is provided in step 310. In one example, the pressure gradient is calibrated. From said division the time period until the non-combustion outlet process of the fuel gas from the gas tank at the vehicle will occur can be determined. For increasing accuracy, said pressure difference can be divided into a number n of smaller pressure differences. Said division can then be applied to each of the n smaller pressure differences. In such a way a more accurate value for the time can be determined.

In one example, the current pressure is 10 bar and the pressure when the boil-off valve will open is 16 bar. In one example, the total pressure difference of 6 bar will be divided in three steps of 2 bars each, i.e. from 10 bar to 12 bar, from 12 bar to 14 bar, and from 14 bar to 16 bar. The division of the respective pressure difference by the pressure gradient from the model with the respective starting point, i. e. 10 bar, 12 bar, and 14 bar, is calculated for achieving the time which each pressure raising takes. The three such determined times are then added to arrive at the time when the boil-off valve will open. In this case n=3.

In general, a higher n gives a higher accuracy. It should, however, be noted that a higher n gives higher calculation time. According to an embodiment, n=10 gives a good compromise between accuracy and calculation time. In a given example such a value caused an error between a determined time and a measured time of only a fraction of a per cent, which is totally acceptable. If, however, ambient conditions of the tank are changing substantially, higher values of n might be recommended. Even a value of n in the order of hundred thousand can still give calculation times below one second with current control units, which usually is acceptable.

In one example, step 340 comprises step 341. In step 341 a first state of the fuel gas in the gas tank is determined. In one example, said first state is the current state of the fuel gas. The determination of the first state can be bases on the determined pressure and/or temperature from step 320, and/or the determined data relating to the volume of the fuel gas in its liquid phase from step 330. The determined first state can comprise any of the other values related to a state of the gas which have been discussed before. After step 341, in one example a step 342 is performed.

In one example, step 340 comprises step 342. In step 342 a next state of the fuel gas in the gas tank after a pre-determined time period is determined, based on the model and based on the previous determined state of the fuel gas in the gas tank. Said determination is in one example also based on one or more ambient values of the gas tank. Such ambient values are in one example an ambient temperature, or any of the other values discussed before in this disclosure.

Step 342 can be repeated until a pre-determined condition is fulfilled. For example, after the initial state a second state is determined in step 342 based on the model and based on the initial state. In the next run of step 342, a third state is determined based on the model and based on the second state, and so on. Said pre-determined condition relates in one example to a pre-determined pressure in the gas tank. Said pre-determined pressure can be the pressure when the boil-off valve opens. Thus, in one example, when the state determined in step 342 has a pressure equal to or higher than the pre-determined pressure, the repetition of step 342 is stopped. In one example, the sum of the pre-determined time periods from each time performing step 342 is said determined time data relating to the outlet process of the fuel gas. In general, the shorter the time periods when performing step 342, the more accurate will the determined time be. There will be a bias error when taking too long time steps. Too short time steps will increase calculation time. As an example, time steps of one hour between the different determined states when performing step 342 might perform a good compromise between accuracy of the determined time data relating to a non-combustion outlet process of the fuel gas and a short calculation time.

After step 340, a step 350 is performed.

In step 350, said determined time data is presented to an operator of the vehicle. In one example, the presentation is acoustical, optical and/or tactile. Further details of the presentation have been discussed in relation to Fig. 2. Said presentation can, for example be "In 15 hours a gas release from the tank will occur", or "In 6 days the tank will be substantially empty". After step 350 the method 300 ends.

In relation to method 300 the steps have been described in a certain order. The steps can, however, also be performed in different orders, or simultaneously. The only limitation in the order arises if one step needs information which has to be provided by another step.

The method 300 is preferably performed in relation to a turning-off of the combustion engine. Such a turning-off will cause a slow raising of the pressure in the tank and thus eventually the opening of a boil-off valve, unless the combustion engine is not turned on again before the pressure gets too high. Thus, when turning off the combustion engine, the determined time data relating to a non-combustion outlet process of the fuel gas is important information to the operator of the vehicle. The operator can then plan to use the vehicle again before the release of the fuel gas occurs, or at least before the fuel tank is substantially empty. Thus, in one example, the performing of method 300 can be triggered by the turning-off of the combustion engine, or a similar action indicative thereof, as has been described before. In another example, the method 300 can be performed repeatedly during operation of the vehicle. In one example, the method determines a time relating to when a non-combustion outlet process of the fuel gas from the gas tank will occur given the combustion engine would be turned off at that moment. If an operator plans to use the vehicle again after, for example, a number of days or hours, the operator could then continue operating the vehicle at the moment until the pressure in the tank has lowered so much that the determined time until the non-combustion outlet process of the fuel gas from the gas tank will take place is that number of days or hours, or longer.

In one example, the determined time of step 340 is a time how long the operator has to drive the vehicle to allow a turning-off of the combustion engine for a pre-determined amount of time without releasing fuel gas from the tank. As an example, a presented message in step 350 can then be "If you drive 15 more minutes, you can turn off the combustion engine for 48 hours without releasing gas."

The inventive method, and embodiments thereof, as described above, may at least in part be performed with/using/by at least one device. The inventive method, and embodiments thereof, as described above, may be performed at least in part with/using/by at least one device that is suitable and/or adapted for performing at least parts of the inventive method and/or embodiments thereof. A device that is suitable and/or adapted for performing at least parts of the inventive method and/or embodiments thereof may be one, or several, of a control unit, an electronic control unit (ECU), an electronic circuit, a computer, a computing unit and/or a processing unit.

With reference to the above, the inventive method, and embodiments thereof, as described above, may be referred to as an, at least in part, computerised method. Said method being, at least in part, computerised meaning that it is performed at least in part with/using/by said at least one device that is suitable and/or adapted for performing at least parts of the inventive method and/or embodiments thereof.

With reference to the above, the inventive method, and embodiments thereof, as described above, may be referred to as an, at least in part, automated method. Said method being, at least in part, automated meaning that it is performed with/using/by said at least one device that is suitable and/or adapted for performing at least parts of the inventive method and/or embodiments thereof.

The method 300 can be implemented on an existing control unit of a vehicle. This can, for example, be performed via an update. This would not require any additional components and is thus a very cost-efficient way. Alternatively, or additionally, the method 300 could be implemented on a control unit especially for this purpose. This has the advantage that such a control unit can be especially designed for that purpose. Further, less effort has to be put on lowering calculation time.

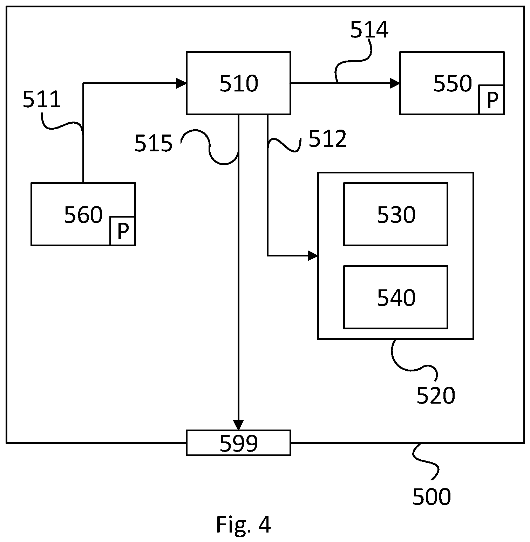

Figure 4 is a diagram of one version of a device 500. The control units 200 and 205 described with reference to Figure 2 may in one version comprise the device 500. The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

The computer program comprises routines for determining time data relating to a non-combustion outlet process of a fuel gas from a gas tank at a vehicle.

The computer program P may comprise routines providing a model for the state of said fuel gas in said gas tank. This may at least partly be performed by means of said first control unit 200.

The computer program P may comprise routines for determining the pressure and/or the temperature in the gas tank. This may at least partly be performed by means of said first control unit 200 controlling operation of the first and second sensor arrangement 230, 231. Said determined pressure and/or temperature may be stored in said non-volatile memory 520.

The computer program P may comprise routines for determining data relating to the volume of the fuel gas in its liquid phase in the gas tank. This may at least partly be performed by means of said first control unit 200 controlling operation of said third sensor arrangement 270. Said determined data relating to the volume of the fuel gas in its liquid phase in the gas tank may be stored in said non-volatile memory 520.

The computer program P may comprise routines for determining time data relating to the outlet process of the fuel gas based on said model. This may at least partly be performed by means of said first control unit 200. Said determined time data may be stored in said non-volatile memory 520.

The computer program P may comprise routines for presenting said determined time data to an operator of the vehicle. This may at least partly be performed by means of said first control unit 200 controlling operation of the presenting arrangement 260.

The program P may be stored in an executable form or in compressed form in a memory 560 and/or in a read/write memory 550.

Where it is stated that the data processing unit 510 performs a certain function, it means that it conducts a certain part of the program which is stored in the memory 560 or a certain part of the program which is stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is arranged to communicate with the data processing unit 510 via a data bus 514. The links L205, L210, L250-255, and L270, for example, may be connected to the data port 599 (see Figure 2).

When data are received on the data port 599, they can be stored temporarily in the second memory element 540. When input data received have been temporarily stored, the data processing unit 510 can be prepared to conduct code execution as described above.

Parts of the methods herein described may be conducted by the device 500 by means of the data processing unit 510 which runs the program stored in the memory 560 or the read/write memory 550. When the device 500 runs the program, methods herein described are executed.

The foregoing description of the preferred embodiments of the present invention is provided for illustrative and descriptive purposes. It is neither intended to be exhaustive, nor to limit the invention to the variants described, the scope of the invention being limited by the appended claims. Many modifications and variations will obviously suggest themselves to one skilled in the art. The embodiments have been chosen and described in order to best explain the principles of the invention and their practical applications and thereby make it possible for one skilled in the art to understand the invention for different embodiments and with the various modifications appropriate to the intended use.

## Claims

1. A method (300) for determining time data relating to a non-combustion outlet process of a fuel gas from a gas tank at a vehicle, wherein the non-combustion outlet process relates to an outlet process of the fuel gas from the gas tank where the fuel gas is not intended to be used in a following combustion process, the gas tank comprising outlet arrangement, wherein the outlet process of the fuel gas comprises opening of the outlet arrangement under a pre-determined condition, wherein time data comprises a time relating to when said fuel gas will start to release from the gas tank, wherein the fuel gas is Liquified Natural Gas, LNG, the method comprising the steps:

   - providing (310) a model for the state of said fuel gas in said gas tank; and
   - determining (340) time data relating to the outlet process of the fuel gas based on said model
   - presenting (350) said determined time data to an operator of the vehicle.

2. The method according to claim 1, wherein said determined time data further comprises a time relating to when the tank will be substantially emptied from said fuel gas.

3. The method according to anyone of the previous claims, further comprising the step of:

   - determining (320) the pressure and/or the temperature in the gas tank; wherein said model takes into account said determined pressure and/or temperature in the gas tank.

4. The method according to anyone of the previous claims, further comprising the step of:

   - determining (330) data relating to the volume of the fuel gas in its liquid phase in the gas tank; wherein said model takes into account said determined data relating to the volume of the fuel gas in its liquid phase in the gas tank.

5. The method according to anyone of the previous claims, wherein said determining of time data comprises performing an Euler method, such as an Euler forward method, of said model for the state of said fuel gas.

6. The method according to anyone of the previous claims, wherein said determining of time data comprises the steps:

   - determining (341) a first state of the fuel gas in said gas tank; and,
   - repeatedly, until a pre-determined condition is fulfilled, determining (342) a next state of the fuel gas in said gas tank after a pre-determined time period, based on said model and based on the previous determined state of the fuel gas in said gas tank.

7. A system (299) for determining time data relating to a non-combustion outlet process of a fuel gas from a gas tank (220) at a vehicle (100), wherein the non-combustion outlet process relates to an outlet process of the fuel gas from the gas tank where the fuel gas is not intended to be used in a following combustion process, the gas tank comprising outlet arrangement, wherein the outlet process of the fuel gas comprises opening of the outlet arrangement under a pre-determined condition, wherein time data comprises a time relating to when said fuel gas will start to release from said gas tank, wherein the fuel gas is Liquified Natural Gas, LNG, the system comprising:

  - means (200; 205) for providing a model for the state of said fuel gas in said gas tank; and
  - means (200; 205) for determining time data relating to the outlet process of the fuel gas based on said model
  - means (260) for presenting said determined time data to an operator of the vehicle.

8. The system according to claim 7, wherein said determined time data further comprises a time relating to when the tank will be substantially emptied from said fuel gas.

9. The system according to anyone of claim 7-8, further comprising:

  - means (230; 231) for determining the pressure and/or the temperature in the gas tank;
  wherein said model takes into account said determined pressure and/or temperature in the gas tank.

10. The system according to anyone of claims 7-9, further comprising:

  - means (232) for determining data relating to the volume of the fuel gas in its liquid phase in the gas tank;
  wherein said model takes into account said determined data relating to the volume of the fuel gas in its liquid phase in the gas tank.

11. A vehicle (100), comprising a system according to any of claims 7-10.

12. A computer program (P) for determining time data relating to non-combustion outlet process of a fuel gas from a gas tank at a vehicle, wherein said computer program (P) comprises program code for causing an electronic control unit (200; 500) or a computer (205; 500) connected to the electronic control unit (200; 500) to perform the steps according to anyone of the claims 1-6.

13. A computer program product containing a program code stored on a computer-readable medium for performing method steps according to anyone of claims 1-6, when said computer program is run on an electronic control unit (200; 500) or a computer (205; 500) connected to the electronic control unit (200; 500).

**Patentansprüche**

1. Verfahren (300) zur Bestimmung von Zeitdaten in Bezug auf einen Nichtverbrennungs-Auslassvorgang eines Brenngases aus einem Gasbehälter an einem Fahrzeug, wobei der Nichtverbrennungs-Auslassvorgang einen Auslassvorgang des Brenngases aus dem Gasbehälter betrifft, bei dem das Brenngas nicht dazu vorgesehen ist, in einem anschließenden Verbrennungsvorgang verwendet zu werden, wobei der Gasbehälter eine Auslassanordnung aufweist, wobei der Auslassvorgang des Brenngases ein Öffnen der Auslassanordnung bei einer vorbestimmten Bedingung umfasst, wobei Zeitdaten eine Zeit umfassen, die sich darauf bezieht, wann das Brenngas damit beginnen wird, aus dem Gasbehälter zu entweichen, wobei das Brenngas Flüssig-Erdgas, LNG, ist und das Verfahren die Schritte umfasst:

  - Bereitstellen (310) eines Modells für den Zustand des Brenngases in dem Gasbehälter, und
  - Ermitteln (340) von den Auslassvorgang des Brenngases betreffenden Zeitdaten basierend auf dem Modell,
  - Darstellen (350) der ermittelten Zeitdaten gegenüber einem Bediener des Fahrzeugs.

2. Verfahren nach Anspruch 1, bei dem die ermittelten Zeitdaten ferner eine Zeit umfassen, die sich darauf bezieht, wann der Behälter von dem Brenngas im Wesentlichen entleert sein wird.

3. Verfahren nach einem der vorhergehenden Ansprüche, ferner umfassend den Schritt:

  - Ermitteln (320) des Drucks und/oder der Temperatur in dem Gasbehälter, wobei das Modell den ermittelten Druck und/oder die Temperatur in dem Gasbehälter berücksichtigt.

4. Verfahren nach einem der vorhergehenden Ansprüche, ferner umfassend den Schritt:

> - Ermitteln (330) von Daten, die das Volumen des Brenngases in seiner flüssigen Phase in dem Gasbehälter betreffen,
> wobei das Modell die ermittelten Daten berücksichtigt, welche das Volumen des Brenngases in seiner flüssigen Phase in dem Gasbehälter betreffen.

5. Verfahren nach einem der vorhergehenden Ansprüche, bei dem das Bestimmen von Zeitdaten ein Ausführen eines Euler-Verfahrens, wie z. B. eines Euler-Vorwärtsverfahrens, des Modells für den Zustand des Brenngases umfasst.

6. Verfahren nach einem der vorhergehenden Ansprüche, bei dem das Bestimmen von Zeitdaten die Schritte umfasst:

> - Ermitteln (341) eines ersten Zustands des Brenngases in dem Gasbehälter, und
> - wiederholtes Ermitteln (342), bis eine vorbestimmte Bedingung erfüllt ist, eines nächsten Zustandes des Brenngases in dem Gasbehälter nach einer vorbestimmten Zeitdauer basierend auf dem Modell und basierend auf dem zuvor ermittelten Zustand des Brenngases in dem Gasbehälter.

7. System (299) zur Bestimmung von Zeitdaten in Bezug auf einen Nichtverbrennungs-Auslassvorgang eines Brenngases aus einem Gasbehälter (220) an einem Fahrzeug (100), wobei der Nichtverbrennungs-Auslassvorgang einen Auslassvorgang des Brenngases aus dem Gasbehälter betrifft, bei dem das Brenngas nicht dazu vorgesehen ist, in einem anschließenden Verbrennungsvorgang verwendet zu werden, wobei der Gasbehälter eine Auslassanordnung aufweist, wobei der Auslassvorgang des Brenngases ein Öffnen der Auslassanordnung bei einer vorbestimmten Bedingung umfasst, wobei Zeitdaten eine Zeit umfassen, die sich darauf bezieht, wann das Brenngas damit beginnen wird, aus dem Gasbehälter zu entweichen, wobei das Brenngas Flüssig-Erdgas, LNG, ist und das System aufweist:

> - eine Einrichtung (200; 205) zum Bereitstellen eines Modells für den Zustand des Brenngases in dem Gasbehälter, und
> - eine Einrichtung (200; 205) zum Ermitteln von den Auslassvorgang des Brenngases betreffenden Zeitdaten basierend auf dem Modell,
> - eine Einrichtung (260) zum Darstellen der ermittelten Zeitdaten gegenüber einem Bediener des Fahrzeugs.

8. System nach Anspruch 7, bei dem die ermittelten Zeitdaten ferner eine Zeit umfassen, die sich darauf bezieht, wann der Behälter von dem Brenngas im Wesentlichen entleert sein wird.

9. System nach einem der Ansprüche 7 bis 8, ferner umfassend:

> - eine Einrichtung (230; 231) zum Ermitteln des Drucks und/oder der Temperatur in dem Gasbehälter,
> wobei das Modell den ermittelten Druck und/oder die Temperatur in dem Gasbehälter berücksichtigt.

10. System nach einem der Ansprüche 7 bis 9, ferner umfassend:

> - eine Einrichtung (232) zum Ermitteln von Daten, die das Volumen des Brenngases in seiner flüssigen Phase in dem Gasbehälter betreffen, wobei das Modell die ermittelten Daten berücksichtigt, welche das Volumen des Brenngases in seiner flüssigen Phase in dem Gasbehälter betreffen.

11. Fahrzeug (100), das ein System nach einem der Ansprüche 7 bis 10 aufweist.

12. Computerprogramm (P) zur Bestimmung von Zeitdaten, die einen Nichtverbrennungs-Auslassvorgang eines Brenngases aus einem Gasbehälter an einem Fahrzeug betreffen, wobei das Computerprogramm (P) Programmcode umfasst, um eine elektronische Steuereinheit (200; 500) oder einen mit der elektronischen Steuereinheit (200; 500) verbundenen Computer (205; 500) dazu zu veranlassen, die Schritte nach einem der Ansprüche 1 bis 6 auszuführen.

13. Computerprogrammprodukt, das einen auf einem computerlesbaren Medium gespeicherten Programmcode zum Ausführen von Verfahrensschritten nach einem der Ansprüche 1 bis 6 enthält, wenn das Computerprogramm auf einer elektronischen Steuereinheit (200; 500) oder einem mit der elektronischen Steuereinheit (200; 500) verbundenen Computer (205; 500) abläuft.

**Revendications**

1. Un procédé (300) pour la détermination de données temporelles relatives à un processus de sortie sans combustion d'un gaz combustible d'un réservoir de gaz d'un véhicule, dans lequel le processus de sortie sans combustion concerne un processus de sortie du gaz combustible du réservoir de gaz où le gaz combustible n'est pas destiné à être utilisé dans un processus de combustion suivant, le réservoir de gaz comprenant une disposition de sortie, dans lequel le processus de sortie du gaz combustible comprend l'ouverture de la disposition de sortie conformément à une condition prédéterminée, dans lequel les données temporelles comprennent un temps relatif au moment où ledit gaz combustible commencera à se libérer du réservoir de gaz, dans lequel le gaz combustible est du gaz naturel liquéfié, GNL, le procédé comprenant les étapes :

    - fournir (310) un modèle pour l'état dudit gaz combustible en ledit réservoir de gaz ; et
    - déterminer (340) les données temporelles relatives au processus de sortie du gaz combustible basé sur ledit modèle
    - présenter (350) lesdites données temporelles déterminées à un opérateur du véhicule.

2. Le procédé selon la revendication 1, dans lequel lesdites données temporelles déterminées comprennent en outre un temps relatif au moment où le réservoir sera substantiellement vidé dudit gaz combustible.

3. Le procédé selon l'une quelconque des revendications précédentes, comprenant en outre l'étape de :

    - déterminer (320) la pression et/ou la température dans le réservoir de gaz ; dans lequel ledit modèle prend en compte ladite pression et/ou température déterminée dans le réservoir de gaz.

4. Le procédé selon l'une quelconque des revendications précédentes, comprenant en outre l'étape de :

    - déterminer (330) les données relatives au volume du gaz combustible dans sa phase liquide dans le réservoir de gaz ;
    dans lequel ledit modèle prend en compte lesdites données déterminées relatives au volume du gaz combustible dans sa phase liquide dans le réservoir de gaz.

5. Le procédé selon l'une quelconque des revendications précédentes, dans lequel ladite détermination des données temporelles comprend l'exécution d'une méthode d'Euler, tel qu'une méthode avancée d'Euler, dudit modèle pour l'état dudit gaz combustible.

6. Le procédé selon l'une quelconque des revendications précédentes, dans lequel ladite détermination des données temporelles comprend les étapes :

    - déterminer (341) un premier état du gaz combustible dans ledit réservoir de gaz ; et,
- de manière répétée, jusqu'à ce qu'une condition prédéterminée soit remplie, déterminer (342) un état suivant du gaz combustible dans ledit réservoir de gaz après une période prédéterminée, sur base dudit modèle et sur base de l'état déterminé précédent du gaz combustible dans ledit réservoir de gaz.

7. Un système (299) pour la détermination des données temporelles relatives à un processus de sortie sans combustion d'un gaz combustible d'un réservoir de gaz (220) d'un véhicule (100), dans lequel le processus de sortie sans combustion concerne un processus de sortie du gaz combustible du réservoir de gaz où le gaz combustible n'est pas destiné à être utilisé dans un processus de combustion suivant, le réservoir de gaz comprenant une disposition de sortie, dans lequel le processus de sortie du gaz combustible comprend l'ouverture de la disposition de sortie conformément à une condition prédéterminée, dans lequel les données temporelles comprennent un temps relatif au moment où ledit gaz combustible commencera à se libérer dudit réservoir de gaz, dans lequel le gaz combustible est du gaz naturel liquéfié, GNL, le système comprenant :

    - des moyens (200 ; 205) pour fournir un modèle pour l'état dudit gaz combustible dans ledit réservoir de gaz ; et
    - des moyens (200 ; 205) pour déterminer les données temporelles relatives au processus de sortie du gaz combustible basé sur ledit modèle
    - des moyens (260) pour présenter lesdites données temporelles déterminées à un opérateur du véhicule.

8. Le système selon la revendication 7, dans lequel lesdites données temporelles déterminées comprennent en outre un temps relatif au moment où le réservoir sera substantiellement vidé dudit gaz combustible.

9. Le système selon l'une quelconque des revendications 7-8, comprenant en outre :

    - des moyens (230 ; 231) pour déterminer la pression et/ou la température dans le réservoir de gaz ;
    dans lequel ledit modèle prend en compte ladite pression et/ou température déterminée dans le réservoir de gaz.

10. Le système selon l'une quelconque des revendications 7-9, comprenant en outre :

    - des moyens (232) pour déterminer les données relatives au volume du gaz combustible dans sa phase liquide dans le réservoir de gaz ;
dans lequel ledit modèle prend en compte lesdites données déterminées relatives au volume du gaz combustible dans sa phase liquide dans le réservoir de gaz.

11. Un véhicule (100) comprenant un système selon l'une quelconque des revendications 7-10.

12. Un programme informatique (P) pour déterminer des données temporelles relatives au processus de sortie sans combustion d'un gaz combustible provenant d'un réservoir de gaz d'un véhicule, dans lequel ledit programme informatique (P) comprend un code de programme pour amener une unité de commande électronique (200 ; 500) ou un ordinateur (205 ; 500) connecté à l'unité de commande électronique (200 ; 500) à exécuter les étapes selon l'une quelconque des revendications 1-6.

13. Un produit de programme informatique contenant un code de programme stocké sur un support lisible par ordinateur pour l'exécution des étapes de procédé selon l'une quelconque des revendications 1-6, lorsque ledit programme informatique est exécuté sur une unité de commande électronique (200 ; 500) ou un ordinateur (205 ; 500) connecté à l'unité de commande électronique (200 ; 500) .

Fig. 1

Fig. 2a

221
228
222
223
224, 240
220

Fig. 2b

220

240a
252
251
253
Vent line
Vapour line
281
Fueling line
280
Fuel pick-up line

Fig. 2c

300

310

**Start**

provide model

320

determine p and/or T

330

determine volume

340

determine time data

350

present time data

**End**

341

determine first state

determine next state

342

yes   condition
fulfilled?   no

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Dynamics of cryogenic hydrogen storage in insulated pressure vessels for automotive applications. **AHLUWALIA R K et al.** INTERNATIONAL JOURNAL OF HYDROGEN ENERGY. ELSEVIER SCIENCE PUBLISHERS B.V, 01 September 2008, vol. 33, 4622-4633